# EUROPEAN PATENT APPLICATION

(11) **EP 1 839 956 A2**
(43) Date of publication of application: **03.10.2007**
(21) Application number: 07075187.0
(22) Date of filing: 13.03.2007
(51) Int. Cl.: B60R 16/02

(54) **Universal audio/video docking station for an automobile**

(30) Priority: 21.03.2006 US 385298
(71) Applicant: Delphi Technologies, Inc., Troy, Michigan 48007 (US)
(72) Inventor: Davis, Roger J., Russiaville, IN 46979 (US); Hamilton, Bruce E., Noblesville, IN 46060 (US)
(74) Representative: Denton, Michael John

(57) **Abstract**

An automotive entertainment system (12) includes an interior automotive surface (16) having a receptacle (18) with a first electrical connector (40). The receptacle has a size and shape to matingly receive at least a portion of each of a plurality of different types of audio/video components (52). The first electrical connector connects to a second electrical connector (54) of each of the different types of audio/video components. An electrical conductor (46) is electrically connected to the first connector and is also electrically connected to a power source (62), a processor (50), an audio speaker (66), or an antenna (68).

## Description

### TECHNICAL FIELD

This invention relates generally to automotive entertainment systems, and, more particularly, to a novel electrical connection system for an automotive entertainment system.

### BACKGROUND OF THE INVENTION

Automotive electronic components for entertainment or navigation are often mounted in an interior surface within the passenger compartment of a vehicle. For example, audio/video entertainment components and electronic navigation components are often mounted in structures such as dashboards, roofs and the backs of front seats in automobiles. The entertainment and navigation components typically come in various sizes and shapes, thereby requiring the automotive structures in which they are mounted to be specially manufactured to accommodate the particular size and shape of the entertainment/navigation component to be received. Thus, the automobile manufacturer must keep an inventory of several types of dashboards, ceilings and seats in order to mount the particular type of entertainment/navigation component that the customer requests to be included in the automobile. Such automotive structures are bulky and heavy, and keeping a large inventory of the structures is expensive for the automobile manufacturer.

Another problem is that once the entertainment/navigation component is mounted in the automobile, it cannot be easily replaced with another entertainment/navigation component of a different size and shape because the automotive structure will not accommodate the different size and shape of the other component. Thus, once a consumer chooses a particular type of entertainment/navigation component to be mounted in the vehicle, he is generally committed to having that particular type of entertainment/navigation component for the life of the vehicle.

What is needed in the art is an automotive system that does not require automotive interior structures to be specially designed and manufactured to accommodate each of various sizes and shapes of entertainment/navigation components. What is also needed is an automotive system that enables a user to easily swap one type of entertainment/navigation component for another.

### SUMMARY OF THE INVENTION

The present invention provides an automotive entertainment system in which an automotive surface includes a receptacle having a size and shape to accommodate different types of entertainment and navigation components. The receptacle includes a connector configured to connect to a corresponding connector on any one of the entertainment and navigation components that is inserted into the receptacle.

The invention defines specific physical dimensional and electrical interface standards for a docking station most appropriately used for rear seat entertainment systems in a motor vehicle across many manufacturers and aftermarket applications. A standard docking station is set for interfacing with various types of dockable hardware, such as a simple video screen available in different sizes; a DVD player with screen; a video player based off hard drive; a satellite radio receiver system with or without video capability; a media system with wireless content delivery; a global positioning satellite (GPS) -based navigation unit, and many other possibilities.

The docking station of the present invention may be provided in a vehicle seatback, a vehicle roof, or in a vehicle dashboard, for example. Home-based and portable docking stations may enable content to be moved from one device or component to another, or may enable a component to become portable for viewing or listening to content in a remote location, such as on an airplane, for example.

The interface standard could be protected by physical design properties that detail electrical interface, connector types, physical docking properties, and possibly some basic command/control messages over an industry-standard data bus.

The invention provides a headrest/seatback docking station or "dock" that may be installed by a seat manufacturer. Then, at a later point, electronics such as a display, a display with digital video/versatile disc (DVD) or hard disk drive (HDD), satellite digital audio receiver system (SDARS) receiver, audio jukebox, etc. may be inserted into the dock. If no electronic component is inserted in the dock, then a blank may be inserted into the receptacle in order to cover the recess.

The docking station may also be included in the dashboard or roof of the vehicle. Further, a desktop docking station that also interfaces with each of the entertainment/navigation components may be electrically connected to a home audio/video device. Thus, content, such as broadcast data, may be transferred between the home audio/video device and the automobile, and may be utilized and enjoyed at either location.

According to one embodiment of the invention, an automotive entertainment system includes an interior automotive surface having a receptacle with a first electrical connector. The receptacle has a size and shape to matingly receive at least a portion of each of a plurality of different types of audio/video components. The first electrical connector connects to a second electrical connector of each of the different types of audio/video components. An electrical conductor is electrically connected to the first connector and is also electrically connected to a power source, a processor, an audio speaker, or an antenna.

According to another embodiment of the present invention, an automotive entertainment system comprises a plurality of different types of audio/video components, including at least one audio component and at least one video component. Each of the audio/video components has a first electrical connector. An interior automotive surface includes a receptacle having a second electrical connector. The receptacle has a size and shape to matingly receive at least a portion of each of the audio/video components. The second electrical connector connects to each of the first electrical connectors of the audio/video components. An electrical conductor is electrically connected to the second connector and to a power source, a processor, an audio speaker, and/or an antenna.

According to yet another embodiment of the present invention, a method of configuring an automotive entertainment system includes providing an interior automotive surface having a receptacle with a first electrical connector. An electrical conductor is electrically connected to the first electrical connector and to a processor, an audio speaker, and/or an antenna. A plurality of different types of audio/video components are provided, including at least one audio component and at least one video component. A selected one of the audio/video components is inserted into the receptacle such that a second electrical connector of the one audio/video component mates with the first electrical connector. An electrical signal is transmitted via the electrical conductor between the one audio/video component and the processor, audio speaker, and/or antenna.

An advantage of the present invention is that different versions of automotive structures do not need to be designed, manufactured, and kept in inventory in order to accommodate entertainment/navigation components of various sizes and shapes. That is, various types of entertainment/navigation components may all be mounted in a seatback, roof or dashboard of a common design.

Another advantage is that a user can easily remove one entertainment/navigation device from the automotive structure and replace it with another.

Yet another advantage is that the audio/video component may be connected to a home audio/video device via a desktop docking station such that the audio/video component may be used to transfer content between the vehicle and the home audio/video device.

A further advantage is that the audio/video component is portable in that it may be removed from the docking station and operated to such that audio/video content may be utilized and enjoyed at a location of the user's choosing, such as on an airplane or outdoors, for example.

### BRIEF DESCRIPTION OF THE DRAWINGS

The present invention will now be described, by way of example, with reference to the accompanying drawings, in which:
FIG. 1 is a sectional, side view of a vehicle including one embodiment of an automotive entertainment system of the present invention.
FIG. 2 is a perspective, fragmentary view of one embodiment of an entertainment/navigation component of the present invention positioned to be inserted into the receptacle of the seatback surface of FIG. 1.
FIG. 3 is a side, sectional view of the entertainment/navigation component and the receptacle of FIG. 2.
FIG. 4 is a block diagram of another embodiment of an automotive entertainment system of the present invention.
Corresponding reference characters indicate corresponding parts throughout the several views. Although the drawings represent an embodiment of the present invention, the drawings are not necessarily to scale and certain features may be exaggerated in order to better illustrate and explain the present invention. The exemplifications set out herein illustrate an embodiment of the invention and such exemplifications are not to be construed as limiting the scope of the invention in any manner.

### DESCRIPTION OF THE PREFFERRED EMBODIMENTS

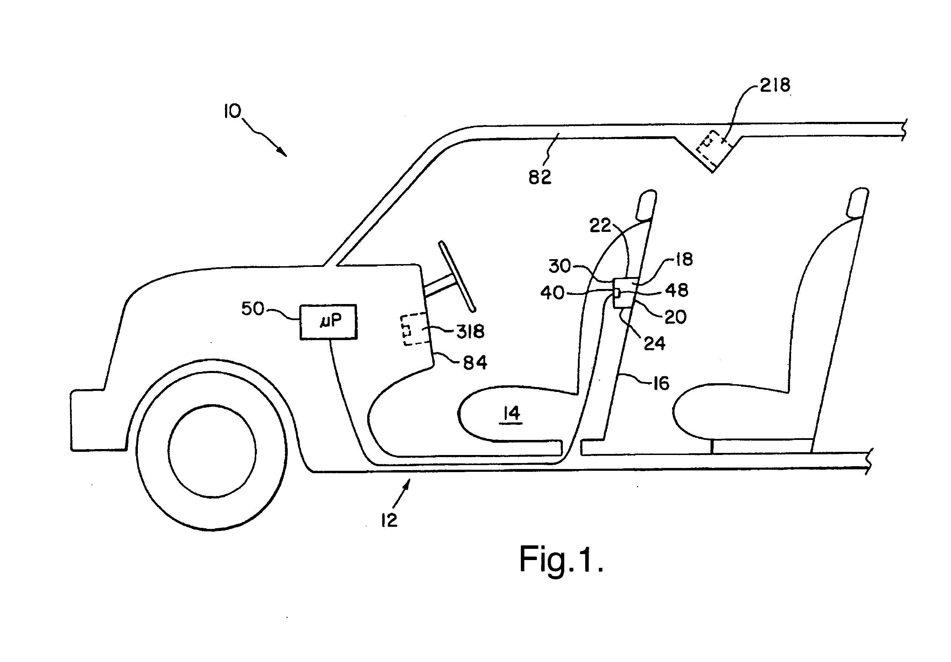

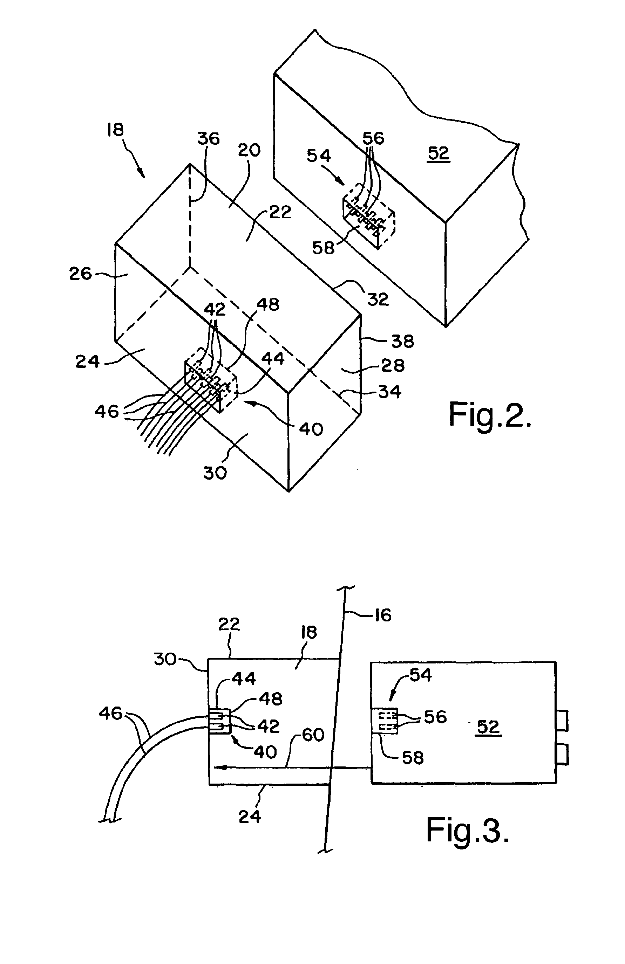

Referring now to the drawings, and particularly to Figure 1, there is shown an automobile 10 including one embodiment of an automotive entertainment system 12 of the present invention. System 12 includes a front passenger seat 14 having a back surface 16 in which a receptacle or recess 18 is provided. Receptacle 18 may be substantially box-shaped, as best shown in Figure 2. Receptacle 18 has an opening 20 that may be co-planar with back surface 16. Receptacle 18 may also have a top wall 22, bottom wall 24, side walls 26, 28, and an end wall 30. Distal edges 32, 34, 36, 38 of respective walls 22, 24, 26, 28 conjointly define opening 20.

An electrical connector 40 may be disposed on end wall 30. Connector 40 may include an array of terminals 42 disposed within a body 44. Body 44 may include an opening 48 such that terminals 42 are visible and accessible through receptacle opening 20. Electrical conductors 46 extend through end wall 30 and may each be electrically connected to a respective one of terminals 42. Conductors 46 may conjointly form a data bus that may be electrically connected to a processor 50 for carrying command/control messages and/or broadcast data. Conductors 46 may also include one or more power lines for supplying power to connector 40.

An entertainment or navigation component 52 is shown in Figure 2 in position to be at least partially inserted through opening 20 and into receptacle 18. Component 52 may be in the form of a global positioning satellite (GPS) -based navigation component. Alternatively, component 52 may be in the form of one of several different types of audio/video entertainment components, such as a radio, television, DVD (digital video disc or digital versatile disc) player, compact disc player, simple video screen available in different sizes, video player based off hard drive, satellite radio receiver system with or without video capability, media system with wireless content delivery, display, display with DVD or HDD, SDARS receiver, or audio jukebox, for example. The automotive entertainment system of the present invention may include several or all of these different types of audio/video components, and all of the audio/video components may be insertable into receptacle 18. That is, receptacle 18 may have a size and shape configured to matingly receive at least a portion of component 52 as well as at least a portion of several different types of audio/video or navigation components that are included in the automotive system.

Component 52 may include an electrical connector 54 that is configured to mate with connector 40 of receptacle 18. In the embodiment shown, connector 54 is a female type connector having terminals 56 disposed within a recess 58.

As indicated by arrow 60 in Figure 3, component 52 may be at least partially inserted into receptacle 18 such connector 54 matingly and electrically connects with connector 40. More particularly, body 44 may be snugly received in recess 58 such that each of terminals 56 is guided into electrical contact with a respective one of terminals 42. Thus, component 52 may be electrically connected to conductors 46, which may include data lines and/or power lines.

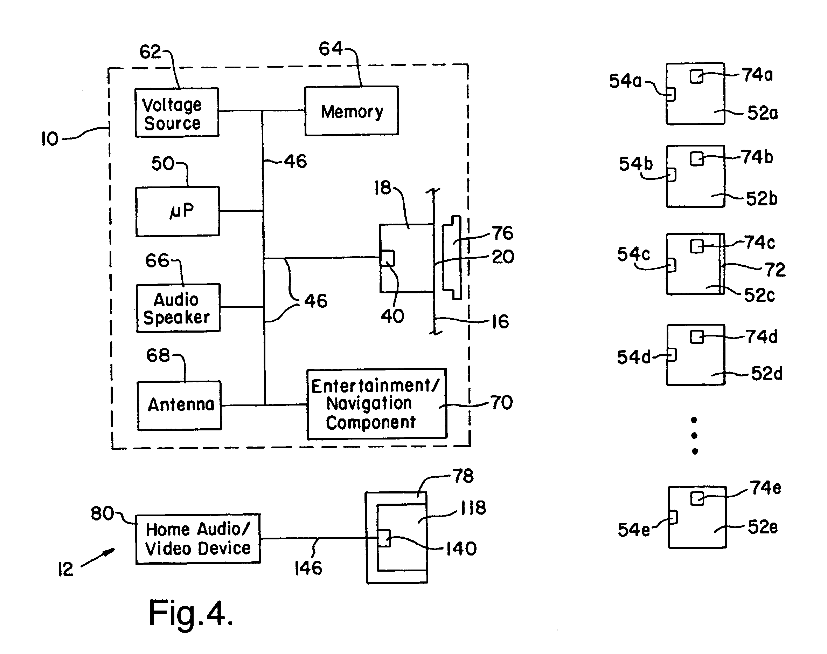

As shown in Figure 4, conductors 46 may be in the form of a bus that is electrically connected to a voltage source 62, a memory device 64, a processor 50, an audio speaker 66, an antenna 68, and an entertainment/navigation component 70 that may be permanently installed in a dashboard of vehicle 10. Voltage source 62 may provide electrical power to an entertainment/navigation component 52 that is inserted in receptacle 18. Memory device 64 may store broadcast data received from antenna 68, component 70, or from a component 52 received in receptacle 18. The broadcast data may be transmitted to and utilized by component 52 or component 70. Processor 50 may control the operation of all devices and components that are connected to bus 46. Speaker 66 may convert signals received from a component 52 or component 70 into sound. Antenna 68 may capture radio signals to be broadcast by a radio type of component 52 or 70.

Entertainment system 12 may comprise a plurality of entertainment/navigation components 52, including a radio 52a, a television 52b, a DVD player 52c having a display screen 72, a compact disc player 52d, and several other types of audio/video components as well as a GPS-based navigation component 52e. Each of components 52a-e includes a respective memory device 74a-e and a respective electrical connector 54a-e. Memory devices 74a-e may store broadcast data. Any of components 52 may be selectively inserted into receptacle 18 such that the connector 54 is electrically connected to connector 40. Thus, any of components 52 may be electrically connected to data bus 46 and to any of devices 50, 62, 64, 66, 68 that are connected to data bus 46. Receptacle 18 has a size and shape suitable to receive and electrically connect to any of components 52.

If none of components 52 is inserted into receptacle 18, then a blank 76 may be used to cover receptacle 18 for cosmetic purposes as well as to protect receptacle 18 from dirt and damage. Blank 76 may be formed of plastic and may have a size and shape to be snugly received in opening 20 of receptacle 18.

System 12 may also include a desktop docking station 78 having a receptacle 118 that may be substantially identical to receptacle 18. That is, receptacle 118 may also have a size and shape configured to matingly receive at least a portion of each of components 52 such that the connector 54 of the received component 52 becomes electrically connected with a connector 140 of receptacle 118. Connector 140 may be substantially identical to connector 40.

Connector 140 may be connected to an electrical conductor 146 that may be in the form of a data bus. Conductor 146 may also be connected to a home audio/video device 80 such as a stereo system, DVD player, and/or audio speaker, for example. Conductor 146 may include data lines and a power lines for carry electrical signals transmitted between docking station 78 and device 80. More particularly, the data lines may carry broadcast data and command/control messages between docking station 78 and device 80, and the power lines may carry electrical power to docking station 78.

Docking station 78 may enable a component 52 to be removed from vehicle 10 and operated in a home environment without reliance on battery power. Docking station 78 may also enable a component 52 to broadcast over home audio speakers that are connected to bus 146 rather than only over a speaker that may be provided in the component itself. Further, bus 146 may carry downloaded broadcast data from home audio/video device 80 to a component 52 inserted into or received in receptacle 118. The downloaded broadcast data stored in component 52 may be utilized via component 52 at a later point in time. Also, component 52 may be later inserted into receptacle 18 such that broadcast data may be transferred to memory 64 for later utilization by component 70.

A receptacle may be additionally or alternatively provided in other automotive surfaces. For example, as shown in Figure 1, a receptacle 218 may be provided in a roof 82, and a receptacle 318 may be provided in a dashboard 84. In other respects, receptacles 218, 318, may be substantially similar to receptacle 18, and thus are not described in more detail herein.

The receptacles of the present invention have been described herein as having a rectangular shape. However, it is to be understood that the receptacles may have any size and shape that is suitable to receive the entertainment/navigation components. The receptacles may have an irregular shape that functions as a key to receive a portion of the entertainment/navigation components that has a corresponding irregular shape.

The embodiments disclosed above are not intended to be exhaustive or to limit the invention to the precise forms disclosed in the detailed description. Rather, the embodiments have been chosen and described so that others skilled in the art may utilize their teachings.

Although described in the exemplary embodiments, it will be understood that various modifications may be made to the subject matter without departing from the intended and proper scope of the invention.

## Claims

1. An automotive entertainment system (12), comprising:
an interior automotive surface (16) including a receptacle (18) having a first electrical connector (40), said receptacle having a size and shape configured to matingly receive at least a portion of each of a plurality of different types of audio/video components (52), said first electrical connector being configured to connect to a second electrical connector (54) of each of the different types of audio/video components; and
an electrical conductor (46) electrically connected to said first connector and configured to also be electrically connected to at least one of a power source (62), a processor (50), an audio speaker (66), and an antenna (68).

2. The system of claim 1, wherein said interior automotive surface comprises a surface of at least one of a seat (14), a roof (82), and a dashboard (84) within a passenger compartment of an automobile (10).

3. The system of claim 1, wherein the audio/video components include at least one audio component and at least one video component.

4. The system of claim 1, wherein the audio/video components include at least one of a radio (52a), a television (52b), a DVD player (52c) having a display screen (72), and a compact disc player (52d).

5. The system of claim 1, wherein said receptacle has a size and shape configured to matingly receive at least a portion of a navigation component (52), said first electrical connector being configured to connect to a second electrical connector (54) of said navigation component.

6. The system of claim 1, further comprising a blank (76) sized and shaped to be received in said receptacle.

7. The system of claim 1, wherein said electrical conductor comprises a data bus.

8. The system of claim 1, wherein said electrical conductor is connected to a processor (50) and is configured to carry command/control messages between said processor and one of said audio/video components when said one audio/video component is received in said receptacle.

9. The system of claim 1, further comprising:
a desktop docking station (78) including a second receptacle (118) having a third electrical connector (140), said second receptacle having a size and shape configured to matingly receive at least a portion of each of the different types of audio/video components, said third electrical connector being configured to connect to the second electrical connectors of the different types of audio/video components; and
a second electrical conductor (146) electrically connected to said third electrical connector and configured to also be electrically connected to a home audio/video device (80).

10. The system of claim 9, wherein said second electrical conductor is configured to carry downloaded broadcast data from the home audio/video device to a selected one of the audio/video components when said one audio/video component is received in said second receptacle, wherein the broadcast data may be later utilized via said one audio/video component.

11. An automotive entertainment system (12), comprising:
a plurality of different types of audio/video components (52), including at least one audio component and at least one video component, each of said audio/video components having a first electrical connector (54);
an interior automotive surface (16) including a receptacle (18) having a second electrical connector (40), said receptacle having a size and shape configured to matingly receive at least a portion of each of the audio/video components, said second electrical connector being configured to connect to each of the first electrical connectors of said audio/video components; and
an electrical conductor (46) electrically connected to said second connector and configured to also be electrically connected to at least one of a power source (62), a processor (50), an audio speaker (66), and an antenna (68).

12. The system of claim 11, wherein said interior automotive surface comprises a surface of at least one of a seat (14), a roof (82), and a dashboard (84) within a passenger compartment of an automobile (10).

13. The system of claim 1 l, wherein the audio/video components include at least one audio component and at least one video component.

14. The system of claim 11, wherein the audio/video components include at least one of a radio (52a), a television (52b), a DVD player (52c) having a display screen (72), and a compact disc player (52d).

15. The system of claim 11, wherein said receptacle has a size and shape configured to matingly receive at least a portion of a navigation component (52), said first electrical connector being configured to connect to a second electrical connector (54) of said navigation component.

16. The system of claim 11, further comprising a blank (76) sized and shaped to be received in said receptacle.

17. The system of claim 11, wherein said electrical conductor comprises a data bus.

18. The system of claim 11, wherein said electrical conductor is connected to a processor (50) and is configured to carry command/control messages between said processor and one of said audio/video components when said one audio/video component is received in said receptacle.

19. The system of claim 11, further comprising:
a desktop docking station (78) including a second receptacle (118) having a third electrical connector (140), said second receptacle having a size and shape configured to matingly receive at least a portion of each of the different types of audio/video components, said third electrical connector being configured to connect to the second electrical connectors of the different types of audio/video components; and
a second electrical conductor (146) electrically connected to said third electrical connector and configured to also be electrically connected to a home audio/video device (80).

20. The system of claim 19, wherein said second electrical conductor is configured to carry downloaded broadcast data from the home audio/video device to a selected one of the audio/video components when said one audio/video component is received in said second receptacle, wherein the broadcast data may be later utilized via said one audio/video component.

21. A method of configuring an automotive entertainment system (12), said method comprising:
providing an interior automotive surface (16) including a receptacle (18) having a first electrical connector (40);
providing an electrical conductor (46) electrically connected to said first electrical connector and to at least one of a processor (50), an audio speaker (66), and an antenna (68);
providing a plurality of different types of audio/video components, including at least one audio component and at least one video component;
inserting a selected one of said audio/video components into said receptacle such that a second electrical connector (54) of said one audio/video component mates with said first electrical connector; and
transmitting an electrical signal via said electrical conductor between said one audio/video component and said at least one of a processor, an audio speaker, and an antenna.

22. The method of claim 21, comprising the further steps of:
removing said selected one of said audio/video components from said receptacle;
inserting an other of said audio/video components into said receptacle such that a second electrical connector (54) of said other audio/video component mates with said first electrical connector; and
transmitting an electrical signal via said electrical conductor between said other audio/video component and said at least one of a processor, an audio speaker, and an antenna.

23. The method of claim 21, comprising the further step of removing a blank (76) from said receptacle before said inserting step.

24. The method of claim 21, wherein said electrical conductor is electrically connected to said processor, said method comprising the further step of transmitting command/control messages via said electrical conductor between said processor and said one audio/video component.

25. The method of claim 21, comprising the further steps of:
providing a desktop docking station (78) including a second receptacle (118) having a third electrical connector (140);
providing a second electrical conductor (146) electrically connected to said third electrical connector and to a home audio/video device (80);
inserting an other of said audio/video components into said second receptacle such that a second electrical connector of said other audio/video component mates with said third electrical connector; and
transmitting an electrical signal via said second electrical conductor between said other audio/video component and said home audio/video device.

26. The method of claim 25, comprising the further steps of:
downloading broadcast data from the home audio/video device to said other audio/video component when said other audio/video component is received in said second receptacle;
removing said other audio/video component from said second receptacle; and
utilizing the broadcast data via said other audio/video component.
